**Europäisches Patentamt**

**European Patent Office**

**Office européen des brevets**

(19)

(11) Veröffentlichungsnummer: **0 282 822 B1**

# EUROPÄISCHE PATENTSCHRIFT

(12)

(45) Veröffentlichungstag der Patentschrift:
**15.05.91 Patentblatt 91/20**

(51) Int. Cl.$^5$: **B23P 25/00, C21D 1/00, F01D 5/02**

(21) Anmeldenummer: **88103213.0**

(22) Anmeldetag: **02.03.88**

(54) **Verfahren zur Herstellung von Turbinenradscheiben mit örtlich hohen Druckeigenspannungen in der Nabenbohrung.**

(30) Priorität: **16.03.87 DE 3708507**

(43) Veröffentlichungstag der Anmeldung:
**21.09.88 Patentblatt 88/38**

(45) Bekanntmachung des Hinweises auf die Patenterteilung:
**15.05.91 Patentblatt 91/20**

(84) Benannte Vertragsstaaten:
**AT CH DE ES FR GB LI SE**

(56) Entgegenhaltungen:
**DE-A- 1 947 272**
**DE-A- 2 352 441**
**DE-U- 8 604 333**

(73) Patentinhaber: **Siemens Aktiengesellschaft Wittelsbacherplatz 2 W-8000 München 2 (DE)**

(72) Erfinder: **Stücker, Erwin Neue Heimat 16 W-4300 Essen-Frintrop (DE)**
Erfinder: **Röttger, Gerhard Härlestrasse 23 W-4330 Mülheim/Ruhr (DE)**

**Beschreibung**

Die vorliegende Erfindung betrifft ein Verfahren zur Herstellung von Teilen für Rotationsmaschinen mit einer Nabenbohrung nach dem Oberbegriff des Anspruchs 1 sowie entsprechend hergestellte Turbinenradscheiben. Insbesondere bezieht sich die Erfindung auf die Herstellung von Turbinenradscheiben für Niederdruckläufer, welche Bohrungen zur Aufnahme von Verdrehsicherungsbolzen aufweisen.

Es ist bekannt, daß Druckeigenspannungen im Oberflächenbereich von Nabenbohrungen die Gefahr von Spannungsrißkorrosion verringern. Durch Spannungsrißkorrosion gefährdete Bereiche sind z. B. die Umgebungen der Verdrehsicherungsbohrungen bei Turbinenläufern.

Nach dem Stand der Technik, z.B. aus der DE-U-8604333, ist es bekannt, metallische Teile von Rotationsmaschinen mit einer Nabenbohrung einer Anlaßbehandlung z. B. bei Temperaturen um etwa 600°C zu unterziehen. In Verbindung mit dieser Behandlung ist es auch bekannt, den Nabenbereich eines solchen Teiles mit einem Kühlfluid, vorzugsweise Wasser, schneller abzukühlen als den übrigen Bereich des Teiles. Der zuerst erkaltete Nabenbereich gerät beim Abkühlen des restlichen Teiles unter starken Druck, so daß sich Druckeigenspannnungen ausbilden. Bei den üblichen Geometrien von rotierenden Teilen, insb. Turbinenradscheiben, entsteht bei dieser Behandlung jedoch ein Druckeigenspannungsprofil, welches, wie anhand der Zeichnung noch näher erläutert wird, die stärksten Druckeigenspannungen im Zentrum der Nabenbohrung aufweist, während die geringsten Druckeigenspannungen in den in axialer Richtung äußeren Bereichen der Nabenbohrung entstehen. Ein solches Profil ist im Hinblick auf die späteren Belastungen nicht unbedingt optimal, da beispielsweise die Verdrehsicherungsbohrungen in den äußeren Bereichen angeordnet werden. Maßnahmen zur Änderung des Profils von tangentialen Druckeigenspannungen sind bisher nicht bekannt.

Aufgabe der vorliegenden Erfindung ist die Schaffung von Teilen für Rotationsmaschinen, welche in der Nabenbohrung ein den Bedürfnissen entsprechendes Profil an tangentialen Druckeigenspannungen aufweist, insbesondere mit den höchsten negativen Druckeigenspannungen in den in axialer Richtung gesehen äußeren Bereichen der Nabenbohrung. Aufgabe der vorliegenden Erfindung ist ferner ein Verfahren zur Beeinflussung des in axialer Richtung verlaufenden Profils der tangentialen Druckeigenspannungen im Inneren des Nabenbereiches.

Zur Lösung dieser Aufgabe wird ein Verfahren mit den kennzeichnenden Merkmalen des Anspruchs 1 vorgeschlagen. Das Wesen der Erfindung besteht darin, daß die Nabenbohrung bei der Abkühlung ein anderes axiales Profil, im folgenden als Vordrehkontur bezeichnet, aufweist, als das später fertiggestellte Teil. Durch unterschiedliche Gestaltung der Vordrehkontur bei der Abkühlung des Nabenbereiches und spätere Abtragung dieser Kontur bis zur endgültig herzustellenden Kontur kann die Verteilung von tangentialen Druckeigenspannungen im Nabenbereich in weitem Umfang beeinflußt werden. Insbesondere ist es möglich, zumindest in einigen Bereichen höhere tangentiale Druckeignespannungen zu erzielen, als dies mit herkömmlichen Methoden durch schnelle Abkühlung des ganzen Teiles oder des Nabenbereiches erreichbar wäre. Die Vordrehkontur wirkt, wie anhand der Zeichnung noch näher erläutert wird, wie ein innerer Druckring, welcher später entfernt wird. Durch Abtragen der Vordrehkontur federt die Radscheibe nach innen (was anschaulich der Wegnahme eines Druckringes entspricht), wobei sich durch die unterschiedliche Dicke der abgetragenen Kontur die Verteilung der Druckeigenspannungen im Nabenbereich erheblich verändert. In Bereichen, wo wenig Material nachträglich abgetragen wird, erhöhen sich die tangentialen Druckeigenspannungen, in Bereichen wo viel Material abgetragen wird, verringern sie sich. Anhand dieser anschaulichen Betrachtung läßt sich bereits erkennen, wie eine Vordrehkontur qualitativ beschaffen sein muß, um ein bestimmtes axiales Profil an tangentialen Druckeigenspannungen zu erzielen.

Bei der hauptsächlichen Anwendung der Erfindung, nämlich der Herstellung von Turbinenradscheiben, kommt es auf hohe tangentiale Druckeigenspannungen im axial äußeren Bereich der Nabenbohrung an, so daß die Vordrehkontur ihr höchstes Aufmaß im Zentralbereich der Nabenbohrung aufweisen muß, um später den gewünschten Effekt zu erreichen.

Entsprechende vorteilhafte Ausgestaltungen des Verfahrens sind in den abhängigen Ansprüchen angegeben. Andere Vordrehkonturen als hier beispielhaft angegeben sind jedoch bei anderen Anforderungen an das herzustellende Profil von Druckeigenspannungen jederzeit möglich. Die Quantifizierung der für ein gewünschtes Profil notwendigen Vordrehkonturen liegt im Bereich des fachmännischen Könnens.

Entsprechend der Erfindung hergestellte Turbinenradscheiben mit ihren speziellen Ausgestaltungen werden in den Ansprüchen 4 und 5 angegeben.

Ein Ausführungsbeispiel der Erfindung wird anhand der Zeichnung näher erläutert. Es zeigen

Fig. 1 eine schematische Darstellung im Längsschnitt einer Turbinenradscheibe nach der Anlaßbehandlung bei der Innenabkühlung durch Wasser,

Fig. 2 einen Längsschnitt durch den Nabenbereich einer Radscheibe mit erfindungsgemäßer Vordrehkontur und dem zugehörigen axialen Profil von tangentialen Druckeigenspannungen im Bereich der Nabenbohrung und

Fig. 3 eine entsprechende Darstellung von Radscheibe und Profil der tangentialen Druckeigenspannungen nach Abtragung der Vordrehkontur bis zur fertigen Kontur.

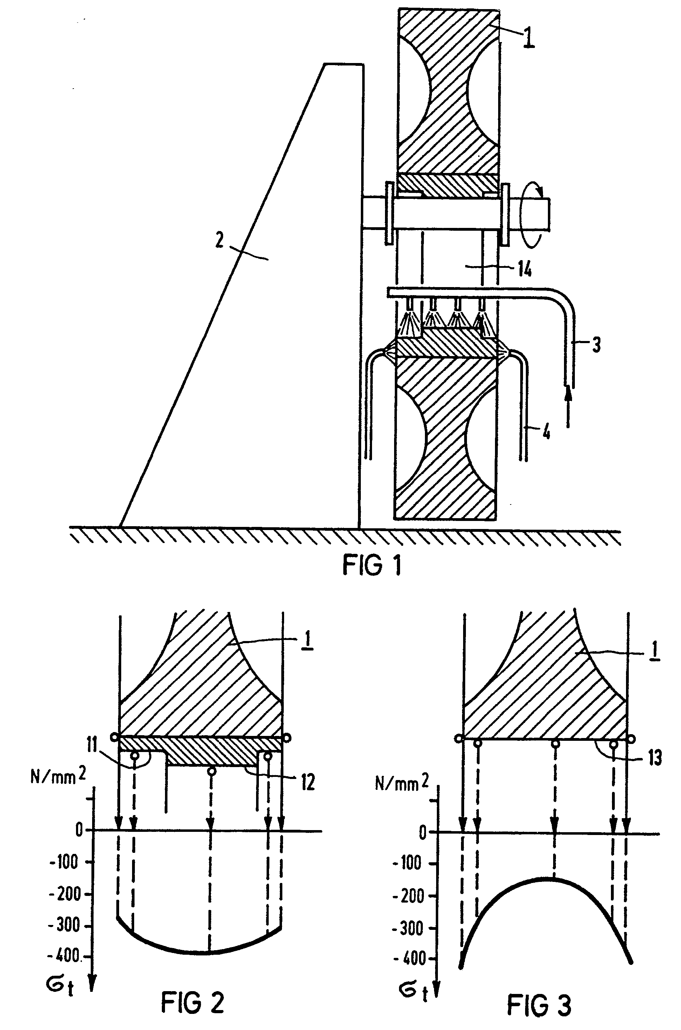

Fig. 1 zeigt eine auf einer Drehvorrichtung 2 montierte Radscheibe 1 nach der Anlaßbehandlung. Eine solche Radscheibe kann beispeilsweise aus 26 NiCr-MoV 145 bestehen und bei einer Temperatur von ca. 600°C wärmebehandlet werden. Die Radscheibe wird unter ständigem langsamen Drehen auf der Innenseite der Nabenbohrung 14 durch Sprühvorrichtungen 3, 4 mit einem Kühlfluid, im allgemeinen Wasser, abgekühlt. Gemäß der vorliegenden Erfindung weist dabei die Nabenbohrung 14 ein von der fertigen Kontur abweichendes axiales Profil, die sogenannte Vordrehkontur, auf.

Es sei noch angemerkt, daß auch durch Eintauchen der ganzen (dann aber waagerecht hängenden) Radscheibe in ein Kühlmittel der gewünschte Effekt erreicht werden kann.

In Fig. 2 ist beispielhaft eine geeignete Vordrehkontur mit dem sich ergebenden axialen Profil an tangentialen Druck Druckeigenspannungen nach der Abkühlung dargestellt. Die Vordrehkontur weist im axial äußeren Bereich 11 der Nabenbohrung nur ein geringes Aufmaß gegenüber der fertig herzustellenden Kontur auf, während der Zentralbereich 12 ein sehr viel größeres Aufmaß hat, beispielsweise etwa 50 bis 100 mm, vorzugsweise etwa 70 mm. Der Zentralbereich bildet quasi einen Zusatzring 12, welcher wie ein Druckring die Radscheibe innen abstützt. Die Lage und Form des Zusatzringes 12 beeinflußt das später entstehende Profil an Druckeigenspannungen. Je nach dem gewünschten Profil können auch mehrere Zusatzringe vorgesehen werden oder es können Breite, Aufmaß und/oder Form des Zusatzringes variiert werden.

Wird die Vordrehkontur 11, 12 schließlich abgetragen, bis die fertige Kontur 13, wie in Fig. 3 dargestellt, entsteht, so entfällt die stützende Wirkung des Zusatzringes, wodurch die Scheibe nach innen federt. Es entsteht das in Fig. 3 dargestellte Profil an tangentialen Druckeigenspannungen, welches folgende Charakteristika aufweist :

a) Die höchsten tangentialen Druckeigenspannungen liegen in den axial äußeren Bereichen der Nabenbohrung ; sie sind wesentlich größer als vorher in diesem Bereich, ggf. sogar größer als die max. negativen Druckeigenspannungen vor Abtragung der Vordrehkontur.

b) Der Zentralbereich der Nabenbohrung weist geringere tangentiale Druckeigenspannungen auf als vorher und als die äußeren Bereiche.

c) Die tangentialen Druckeigenspannungen sind um so niedriger, je mehr Material in dem betreffenden Bereich von der Vordrehkontur bis zur fertigen Kontur abgetragen wurde.

Die vorliegende Erfindung ermöglicht die gezielte Beeinflussung des axialen Profils von tangentialen Druckeigenspannungen in der Nabenbohrung von rotierenden Teilen, insbesondere Radscheiben für Niederdruckturbinenläufer. Es können so gezielt hohe tangentiale Druckeigenspannungen in durch Spannungsrißkorrosion gefährdeten Bereichen hergestellt werden.

**Ansprüche**

1. Verfahren zur Herstellung von Teilen für Rotationsmaschinen mit einer Nabenbohrung (14), insbesondere Turbinenradscheiben (1), wobei zur Erzeugung von Druckeigenspannungen im Nabenbereich nach der Anlaßbehandlung, z. B. unter Temperaturen von etwa 600°C, der Nabenbereich oder das ganze Teil mit einem Kühlfluid, vorzugsweise Wasser, gekühlt wird, **dadurch gekennzeichnet, daß** der Nabenbereich bei der Abkühlung eine Vordrehkontur (11, 12) aufweist, welche sich in ihrem Profil von der herzustellenden Nabenkontur (13) durch einen oder mehrere Zusatzringe (12), welche gegenüber der herzustellenden Nabenkontur (13) ein größeres Aufmaß aufweisen als die übrigen Bereiche (11) der Vordrehkontur unterscheidet, und daß die Vordrehkontur (11, 12) nach dem Abkühlen bis zur herzustellenden Nabenkontur (13) abgetragen wird.

2. Verfahren nach Anspruch 1 **dadurch gekennzeichnet,** daß die Vordrehkontur (11, 12) einen etwa zentralen Zusatzring (12) aufweist, welcher ein Aufmaß von 50 bis 150 mm, vorzugsweise etwa 70 mm, gegenüber der herzustellenden Nabenkontur (13) aufweist, während die übrige Vordrehkontur (11) nur ein geringes Aufmaß, z.B. 5 b. 50 mm, vorzugsweise etwa 10 mm, aufweist.

3. Verfahren nach Anspruch 1 oder 2, **dadurch gekennzeichnet,** daß die in axialer Richtung äußeren Bereiche (11) der Vordrehkontur das geringste Aufmaß aufweisen.

4. Turbinenradscheibe, insbesondere für Niederdruckturbinenläufer, hergestellt nach dem Verfahren gemäß einem der Ansprüche 1 bis 3, **dadurch gekennzeichnet,** daß die Innenoberfläche (13) der Nabenbohrung (14) zumindest in Teilbereichen tangentiale Druckeigenspannungen aufweist, die höher sind, als durch innenseitige Abkühlung in diesen Bereichen nach dem Anlaßvorgang erreichbar wäre, vorzugsweise Druckeigenspannungen zwischen 300 und 400 N/mm², wobei die höchsten tangentialen Druckeigenspannungen in den in axialer Richtung äußeren Bereichen der Nabenbohrung (14) vorhanden sind.

5. Turbinenradscheibe nach Anspruch 4, **dadurch gekennzeichnet,** daß die tangentialen Druckeigenspannungen im Zentrum der Nabenbohrung (14) etwa 150 bis 250 N/mm$^2$ betragen, in den äußeren Berechen jedoch 250 bis 400 N/mm$^2$.

## Claims

1. A method for the manufacture of parts for rotary machines having a hub bore (14), in particular turbine wheel discs (1), wherein for generating internal compressive strains in the hub region after the heat treatment e.g. below temperatures of approx. 600°C, the hub region or the whole part is cooled with a coolant, preferably water, characterised in that the hub region when cooling has a pre-turned contour (11, 12), which is distinguished in its profile from the hub contour (13) which is to be produced, by one or several additional rings (12), which, compared to the hub contour (13) to be produced, has a larger oversize than the remaining regions (11) of the pre-turned contour, and in that after cooling the pre-turned contour (11, 12) is cut down into the hub contour (13) to be produced.

2. A method according to claim 1, characterised in that the pre-turned contour (11, 12) has an approximately central additional ring (12), which has an oversize of 50 to 150 mm, preferably approx. 70 mm, relative to the hub contour (13) to be produced, whilst the remaining pre-turned contour (11) only has a small oversize e.g. 5 to 50 mm, preferably approx. 10 mm.

3. A method according to claim 1 or 2, characterised in that the axially outer regions (11) of the pre-turned contour habe the slightest oversize.

4. A turbine wheel disc, in particular for low pressure turbine rotors, manufactured according to the method according to one of claims 1 to 3, characterised in that the inner surface (13) of the hub bore (14) has at least in partial regions tangential internal compressive strains which are greater than would be achieved by inside cooling into these regions after heat processing, preferably internal compressive strains of between 300 and 400 N/mm$^2$, wherein the highest tangential internal compressive strains are present in the axially outer regions of the hub bore (14).

5. A turbine wheel disc according to claim 4, characterised in that the tangential internal compressive strains in the centre of the hub bore (14) are approximately 150 to 250 N/mm$^2$, but 250 to 400 N/mm$^2$ in the outer regions.

## Revendications

1. Procédé de fabrication de pièces pour des machines tournantes à alésage de moyeu (14), notamment de flasque de roues de turbine (1), la partie du moyeu ou toute la pièce étant, pour produire des contraintes internes de pression dans la partie du moyeu après le traitement de revenu, par exemple à des températures de 600°C environ, refroidie par un fluide de refroidissement, de préférence par de l'eau, caractérisé en ce que la partie du moyeu présente, lors du refroidissement, un contour de dégrossissage au tour (11, 12) qui se distingue par son profil du contour du moyeu (13) à fabriquer, par un ou par plusieurs anneaux supplémentaires (12) qui présentent un excès de dimension, par rapport au contour de moyeu (13) à fabriquer plus grand que les autres parties (11) du contour de dégrossissage au tour, et en ce que, après le refroidissement, on enlève de la matière du contour de dégrossissage au tour (11, 12), jusqu'à obtenir le contour du moyeu (13) à fabriquer.

2. Procédé suivant la revendication 1, caractérisé en ce que le contour de dégrossissage au tour (11, 12) comporte un anneau supplémentaire (12) à peu près central, qui présente un excès de dimension de 50 à 150 mm et, de préférence, de 70 mm environ par rapport au contour de moyeu (13) à fabriquer, tandis que le reste du contour de dégrossissage au tour (11) ne présente qu'un faible excès de dimension, par exemple de 5 à 50 mm et, de préférence, de 10 mm environ.

3. Procédé suivant la revendication 1 ou 2, caractérisé en ce que les parties (11) du contour de dégrossissage au tour qui sont radialement à l'extérieures, présentent l'excès de dimension le plus petit.

4. Flasque de roue de turbine, notamment pour des rotors de turbine basse pression, fabriqué par le procédé suivant l'une des revendications 1 à 3, caractérisé en ce que la surface intérieure (13) de l'alésage de moyeu (14) présente, au moins dans certaines parties, des contraintes tangentielles internes de pression qui sont plus élevées que celles que l'on peut obtenir en les refroidissant par leur côté intérieur après le processus de recuit, de préférence des contraintes internes de pression comprises entre 300 et 400 N/mm$^2$, les contraintes tangentielles internes de pression tangentielles les plus élevées étant présentes dans les parties de l'alésage du moyeu (14) qui sont radialement extérieures, direction axiale.

5. Flasque de roue de turbine suivant la revendication 4, caractérisé en ce que les contraintes tangentielles internes de pression, au centre de l'alésage du moyeu (14), sont comprises entre 150 et 250 N/mm$^2$ environ, mais sont comprises entre 250 et 400 N/mm$^2$ dans les parties extérieures.

FIG 1

FIG 2

FIG 3